# EUROPEAN PATENT APPLICATION

(11) **EP 3 708 686 A1**
(43) Date of publication of application: **16.09.2020**
(21) Application number: 18876589.5
(22) Date of filing: 04.09.2018
(51) Int. Cl.: C22B 9/00, B22C 9/06, B22D 5/00, B22D 27/02, B22D 43/00

(54) **METAL PRODUCT MANUFACTURING DEVICE AND METAL PRODUCT MANUFACTURING METHOD**

(30) Priority: 08.11.2017 JP 2017215772; 10.08.2018 JP 2018151898
(71) Applicant: Takahashi, Kenzo, Shiroi-shi, Chiba 270-1426 (JP)
(72) Inventor: Takahashi, Kenzo, Shiroi-shi, Chiba 270-1426 (JP)
(74) Representative: Regimbeau
(86) International application number: PCT/JP2018/032765
(87) International publication number: WO 2019/092962

(57) **Abstract**

The present invention is provided to make it possible to: remove, with higher accuracy, impurities from a molten metal of a non-ferrous metal or another metal containing the impurities; obtain the molten metal having higher purity; and obtain a high-purity non-metal product or another metal product from the high-purity molten metal.

Provided are: a cylindrical container body portion; an upper end plate and a lower end plate that close both ends of the container body portion in a sealed state; an upper electrode fixed to the upper end plate in a state of passing through the upper end plate, and having an inner end electrically connectable to the molten metal; and a lower electrode fixed to the lower end plate in a state of passing through the lower end plate, and having an inner end electrically connectable to the molten metal, in which at least the upper end plate is detachable from the container body portion, the upper electrode is fixed to a substantially central portion of the upper end plate in the state of passing through the upper end plate in a thickness direction, the lower electrode is fixed to a substantially central portion of the lower end plate in the state of passing through the lower end plate in a thickness direction, and the upper electrode and the lower electrode are located on a substantially vertical straight line in an upper-lower direction.

## Description

### Technical Field

The present invention relates to a metal product manufacturing device and a metal product manufacturing method.

### Background Art

Conventionally, a product of a non-ferrous metal or a product of another metal is produced by performing casting with a molten metal having a conductive property (conductivity), that is, a molten metal of a non-ferrous metal (for example, Al, Cu, Zn, Si, an alloy of at least two of these, an Mg alloy, or the like) or a molten metal of another metal other than the non-ferrous metal. As an initial process out of such processes, there are processes of melting and quality governing. In recent years, due to development in a recycle technology and increase in awareness of environmental conservation, scrap is also increasingly reused. However, there is a problem that impurities are contained in a metal obtained from the scrap. In other words, first of all, impurities are originally contained inside the scrap as a raw material. Additionally, the impurities are generated at the time of melting work of the scrap and are dissolved inside a molten metal. Therefore, it is inevitable that the impurities are contained inside the molten metal obtained by recycling the scrap. When a product of a non-ferrous metal or a product of another metal is produced from such a molten metal, the product results in containing impurities, and quality and performance of the product may be degraded. From this point, it is extremely important to remove impurities from a molten metal that uses the scrap as the raw material. Therefore, conventionally, the impurities are removed from the molten metal by various methods. For example, a filter is used to filtrate and remove the impurities contained inside the molten metal. Furthermore, flux is charged, or gas is blown into the molten metal to change the impurities into a compound, and the compound is made to float on a surface of the molten metal and then removed. Moreover, after the impurities are removed from the molten metal by the flux or the gas, the impurities are further removed from the molten metal by using a filter.

### Summary of Invention

### Technical Problem

As described above, conventionally, there is a method of using a filter as a method of removing impurities from a molten metal. However, the filter is instantly clogged and required to be replaced with a new one shortly. Additionally, to remove finer impurities, it is necessary to: prepare a plurality of filters having different mesh sizes; remove first the impurities by using a filter having a large mesh size, and next remove the impurities by using a mesh size smaller than the previous filter, respectively; and repeat this removal of the impurities multiple times by sequentially using filters having smaller mesh sizes. However, performing such filtration work multiple times by using the filters having the different mesh sizes in order to remove the impurities is actually very troublesome, takes a long time, and leads to increase in operation costs. Also, there is a limit in downsizing a mesh size of a filter, and the mesh size can be downsized only to some extent. Furthermore, the filters are extremely expensive. From such viewpoints, performing the impurity removal work with the filters has problems on whether or not the impurities can be removed, and in the cost and other aspects.

Additionally, the impurities can also be removed from the molten metal to some extent by the method of using flux or gas as described above. However, even with this method, the impurities cannot be removed sufficiently. Furthermore, the impurities inside the molten metal cannot be removed sufficiently even by further filtrating, with a filter, the molten metal from which the impurities have been removed by using the flux or the gas.

Thus, conventionally, it has been actually very difficult to obtain a high-purity molten metal despite a fact that attempts have been made to remove impurities from a molten metal of a non-ferrous metal or a molten metal of another metal obtained from scrap or the like and containing the impurities. Therefore, it is actually not possible to obtain a highly-purity metal product from the molten metal obtained from the scrap or the like. In other words, a metal product required to have high purity is needed to be produced not from the scrap or the like but from a molten metal obtained from a primarily high-purity raw material. Therefore, a high-purity product of a non-metal or a high-purity product of another metal is inevitably expensive. Therefore, conventionally, those skilled in the art found it impossible to remove impurities sufficiently from a recycled molten metal, and gave up on producing a high-purity product from the recycled molten metal from the very start. However, the present inventor questioned about this point and has continued his unique study and research in order to find a method of removing a larger amount of impurities from the recycled molten metal or the like and obtaining a high-purity molten metal, without giving up on using the recycled molten metal or the like.

The present invention is uniquely achieved by the present inventor on the basis of the above-described inventor's unique awareness of the problems, and an object of the present invention is to provide a device and a method capable of: removing impurities, with higher accuracy, from a molten metal of a non-ferrous metal or a molten metal of another metal containing the impurities; obtaining a molten metal having higher purity; and obtaining a high-purity non-metal product or another metal product from the high-purity molten metal.

Note that the present inventor has previously disclosed, in Japanese Patent Nos. 5,669,504 and 5,431,438, the inventions different from the present invention. The technical ideas described in these publications are directed to improving product quality more by rotationally driving a molten metal with large stirring force as quickly and surely as possible, but are not directed to removing impurities from the molten metal. Accordingly, the present invention is a different invention having the technical idea completely different from and unrelated to the inventions of the above-described publications, and is not conceivable from the inventions of the above-described publications.

### Solution to Problem

An embodiment of the present invention is
a metal product manufacturing device including a container that stores a molten metal having a conductive property, the metal product manufacturing device including:
a cylindrical container body portion;
an upper end plate and a lower end plate that close both ends of the container body portion in a sealed state;
an upper electrode fixed to the upper end plate in a state of passing through the upper end plate, and having an inner end electrically connectable to the molten metal; and
a lower electrode fixed to the lower end plate in a state of passing through the lower end plate, and having an inner end electrically connectable to the molten metal, in which
at least the upper end plate is detachable from the container body portion,
the upper electrode is fixed to a substantially central portion of the upper end plate in the state of passing through the upper end plate in a thickness direction,
the lower electrode is fixed to a substantially central portion of the lower end plate in the state of passing through the lower end plate in a thickness direction, and
the upper electrode and the lower electrode are located on a substantially vertical straight line in an upper-lower direction.

Furthermore, an embodiment of the present invention is
a metal product manufacturing method of manufacturing a metal product from a molten metal having a conductive property, the metal product manufacturing method including:
preparing a container that includes:
   a cylindrical container body portion;
   an upper end plate and a lower end plate that close both ends of the container body portion in a sealed state;
   an upper electrode fixed to the upper end plate in a state of passing through the upper end plate, and having an inner end electrically connectable to the molten metal; and
   a lower electrode fixed to the lower end plate in a state of passing through the lower end plate, and having an inner end electrically connectable to the molten metal, in which
   at least the upper end plate is detachable from the container body portion,
   the upper electrode is fixed to a substantially central portion of the upper end plate in the state of passing through the upper end plate in a thickness direction,
   the lower electrode is fixed to a substantially central portion of the lower end plate in the state of passing through the lower end plate in a thickness direction, and
   the upper electrode and the lower electrode are located on a straight line in an upper-lower direction;
making the metal having the conductive property and stored inside the container into a state of a molten metal while the container is sealed by the upper end plate and the lower end plate;
electrically connecting the inner ends of the pair of electrodes to the molten metal having the conductive property; and
applying a current between the pair of electrodes in this state.

### Brief Description of Drawings

FIG. 1 is a schematic entire configuration diagram of a metal product manufacturing device used to implement the present invention.
FIG. 1A is a schematic explanatory view illustrating a form of an actual use state of the device in FIG. 1.
FIG. 2 is an explanatory plan view of a container and a magnetic field device in FIG. 1.
FIG. 3 is an explanatory cross-sectional view taken along a line III-III in FIG. 1.
FIG. 4 is an explanatory plan view of the magnetic field device in FIG. 1.
FIG. 5 is an explanatory plan view illustrating a modified example in FIG. 4.
FIG. 6 is an explanatory longitudinal sectional view of the container in FIG. 1.
FIG. 7 is an explanatory plan view of the container in FIG. 1.
FIG. 8 is an explanatory view of a separated state of a container body and an end plate in FIG. 6.
FIG. 9 is an explanatory view illustrating density of a current flowing between a pair of electrodes via a molten metal.
FIG. 10 is an explanatory view to describe the density of the current in FIG. 9.
FIG. 11 is an explanatory view illustrating a magnetic field generated in the case of FIG. 9.
FIG. 12 is an explanatory view illustrating Lorentz force generated in the case of FIG. 9.
FIG. 13 is an explanatory view illustrating a pressure gradient generated inside the molten metal in the case of FIG. 9.
FIG. 14 is a cross-sectional explanatory view illustrating a distribution state of impurities in a product obtained in the case of FIG. 9.
FIG. 15 is an explanatory view illustrating density of a current in a case of applying the current upward from below contrary to the case of FIG. 9.
FIG. 16 is an explanatory view illustrating the density of the current in FIG. 15.
FIG. 17 is an explanatory view illustrating a magnetic field generated in the case of FIG. 15.
FIG. 18 is an explanatory view illustrating Lorentz force generated in the case of FIG. 9.
FIG. 19 is an explanatory view illustrating one mode of use in FIG. 1 and also is the explanatory view in a case of applying a current downward in a state of applying a magnetic field.
FIG. 20 is an explanatory view illustrating electromagnetic force (Lorentz force) generated in the case of FIG. 19.
FIG. 21 is an explanatory view of electromagnetic force in a case of applying the current upward in a direction opposite to the case of FIG. 19.
FIG. 22 is an end surface view of a product obtained by implementing the present invention.
FIG. 23 is an end surface view of a product obtained under conditions different from those of FIG. 22.
FIG. 24 is an end surface view of a product obtained under conditions different from those in FIG. 22 and the like.
FIG. 25 is an end surface view of a product obtained under conditions different from those of FIG. 22 and the like.
FIG. 26 is an end surface view of a product obtained under conditions different from those of FIG. 22 and the like. Description of Embodiments

As described above, the present invention is provided to solve the above-described technical problem of obtaining a high-quality product from a molten metal containing impurities, that is, the problem unique to the present inventor. In other words, the present invention is based on results of unique experiments repeatedly conducted by the present inventor multiple times in order to solve the technical problem, and the present invention is hardly conceivable by other engineers who are not as proactive as the present inventor in solving the above-described technical problem and have not uniquely conducted the experiments the multiple times.

The more details are as described below.

The present inventor has continued day and night the technical research to obtain a molten metal of a non-ferrous metal or a molten metal of another ferrous metal having higher purity and suitable for producing a higher quality non-metal product and another metal product. In course of the process, the present inventor has become uniquely eager to solve the technical problem of removing impurities from a recycled molten metal or the like containing a large amount of the impurities, regarding which other engineers have not been so proactive.

The research has been made for a long time on the basis of this, and as a result, the present inventor has reached a technical idea as follows. That is, the present inventor has noticed that, in the process of the research, a molten metal of a non-ferrous metal or a molten metal of another ferrous metal containing impurities might be grasped as a so-called multiphase fluid. In other words, the present inventor has reached the idea that the molten metal could be grasped as the multiphase fluid including: the molten metal of the non-ferrous metal or the molten metal of another ferrous metal as a base; and a molten metal of the impurities dissolved therein.

Furthermore, assuming that the above-described multiphase fluid is a multiphase fluid in terms of Archimedes electromagnetic force, it is fairly sure that the multiphase fluid can be theatrically grasped as: the fluid as the base: and the fluid (particles) of the impurities dissolved therein. Assuming that the molten metal of the non-ferrous metal or the molten metal of another ferrous metal containing impurities is the multiphase fluid in terms of the Archimedes electromagnetic force, the impurities inside the molten metal of the non-ferrous metal or the molten metal of another ferrous metal can be moved by the Archimedes electromagnetic force along a pressure gradient by adding the pressure gradient to the molten metal of the non-ferrous metal or the molten metal of another ferrous metal as the base, and consequently, it is fairly sure that the impurities can be separated from the base.

However, conventionally, no prior art has disclosed a technology in which a molten metal containing impurities was separated by the Archimedes electromagnetic force into: a base of a non-ferrous metal or another ferrous metal; and the impurities contained therein. This may be because, conventionally, those skilled in the art have never generally considered the molten metal of the non-ferrous metal or another ferrous metal containing impurities in association with the multiphase fluid in terms of the Archimedes electromagnetic force. In other words, supposedly, those skilled in the art have considered that the molten metal of the non-ferrous metal or another ferrous metal containing the impurities was not the multiphase fluid in terms of the Archimedes electromagnetic force. In other words, supposedly, those skilled in the art have never considered that a molten metal could not be separated into a base and impurities even though the Archimedes electromagnetic force is applied to the molten metal of the non-ferrous metal or another ferrous metal containing the impurities. Actually, there is no prior art that discloses that a molten metal of a non-ferrous metal or another ferrous metal containing impurities can be separated into the molten metal as the base and the impurities by applying the Archimedes electromagnetic force to the molten metal, and also there is no prior art that suggests so.

The present inventor has struggled and repeatedly conducted various kinds of experiments multiple times in order to confirm these points. The experiments were conducted not intending to separate impurities to an upper side and a lower side as conceived by a general engineer but intending to place the impurities in a periphery of a round bar or a square bar so as to easily perform subsequent impurity removal processing, in a case of producing the round bar or the square bar of the non-ferrous metal or another ferrous metal in order to obtain a product having higher purity.

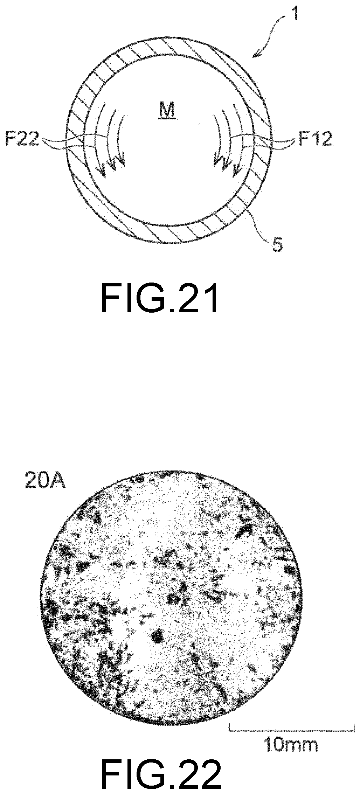

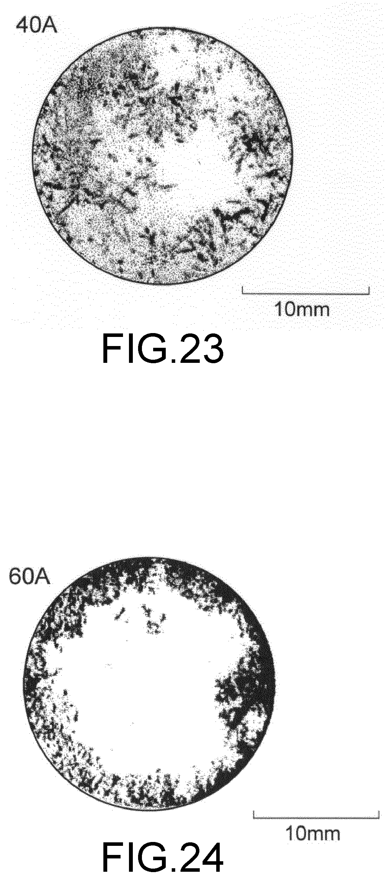

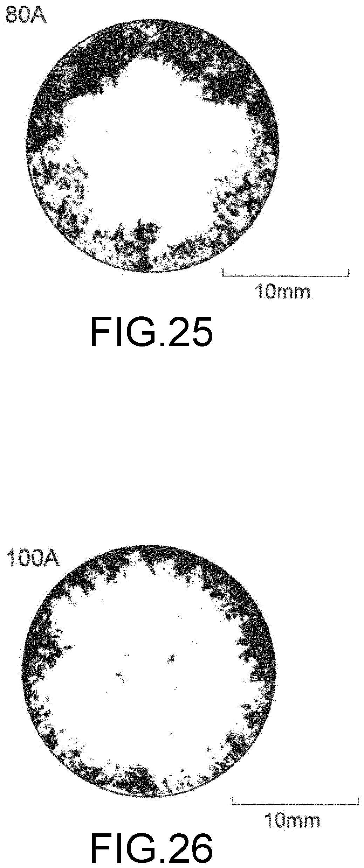

Consequently, products illustrated in FIGS. 24 to 26 and the like could be finally obtained. That is, the products in FIGS. 24 to 26 illustrate end surfaces of aluminum round bars (billets) obtained from the experiments by the present inventor. FIGS. 21 to 26 are diagrams each illustrating distribution of impurities (Al₃Fe) obtained from color photographs of the respective end surfaces of the products. As understood from these diagrams, the impurities (Al₃Fe) could be gathered at a peripheral portion of a high-purity aluminum at a center portion.

Thus, since the impurities could be gathered at the periphery instead of at the upper and lower sides of the product, the subsequent impurity removal processing can be performed while looking at the end surface and visually confirming removal work of the impurities, or the subsequent impurity removal processing can be performed after visually confirming and learning a place of the impurities in advance, and accordingly, the impurities can be easily and surely removed from the product.

Note that it is technically obvious that the technical idea for obtaining such products is applicable to a non-ferrous metal other than aluminum, or to another metal.

Thus, the present inventor has discovered that, through the unique experiments conducted many times by himself, the impurities can be gathered at the periphery from the non-ferrous metal or another metal containing the impurities by using the Archimedes electromagnetic force.

As described above, the present invention is made on the basis of the discovery achieved through the unique experiments conducted by the present inventor, and is the invention that can be achieved only by the inventor who has conducted the experiments and also is the invention that cannot be achieved by other those skilled in the art who have not conducted the experiments. Particularly, it is considered that gathering the impurities at the periphery of the product instead of at the upper and lower sides thereof can be achieved only by the present inventor.

Hereinafter, embodiments of the present invention will be described with reference to the drawings.

First, an outline of a metal product manufacturing device 100 of the present invention will be described with reference to the drawings. Note that each of the drawings is a schematic drawing to describe the present invention, and a scale of a dimension in each of the drawings is not the same, and an aspect ratio of each of members in each of the drawings can be freely selected besides that illustrated in each of the drawings.

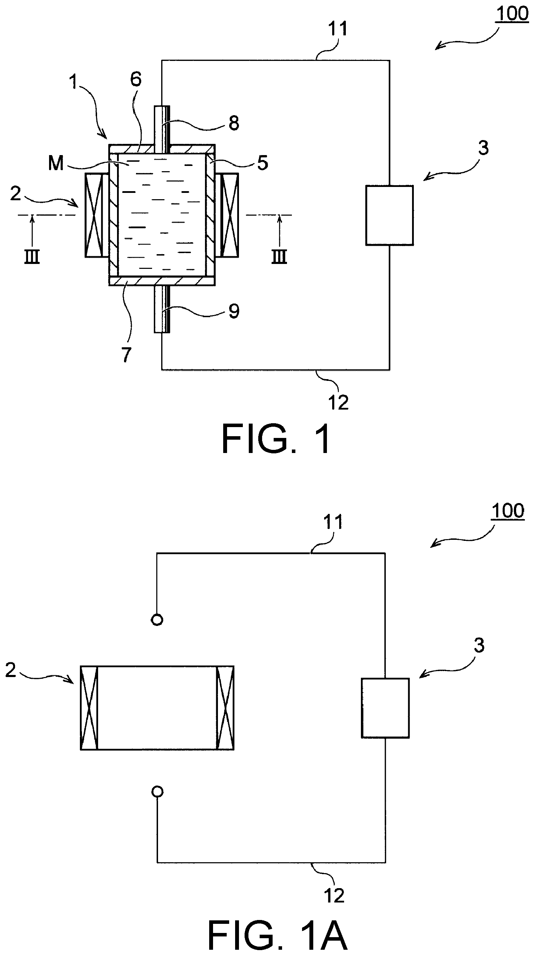

The metal product manufacturing device 100 includes, as illustrated in FIG. 1, a container 1, a magnetic field device 2, and a power supply device 3. The container 1 is provided to store a molten metal obtained from, for example, a non-ferrous metal or another metal that is recycled, includes impurities, and has a conductive property. The non-ferrous metal or another metal is a non-ferrous metal of a conductor (electric conductor) of Al, Cu, Zn, an alloy of at least two of these, an Mg alloy, or the like, or another metal other than the non-ferrous metal. The container 1 is freely detachable from the device 100. Additionally, the magnetic field device 2 is also freely detachable from the device 100 mutually independent from the container 1.

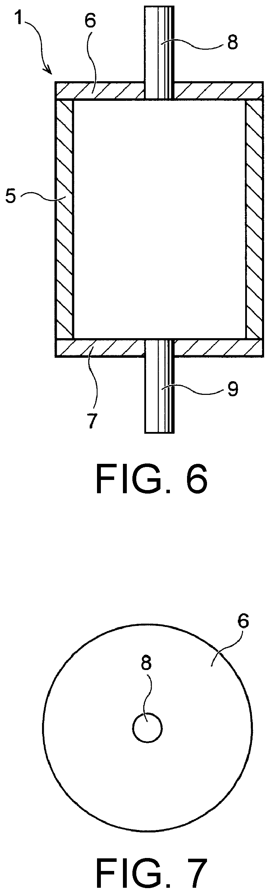

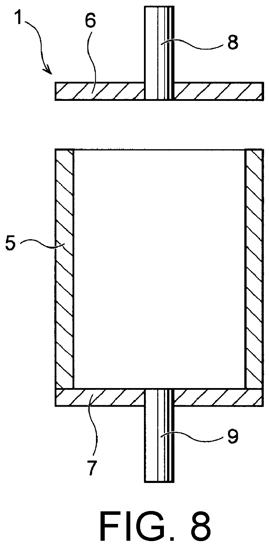

As understood particularly from FIG. 6, the container 1 includes a cylindrical container body 5 and end plates 6 and 7 that close upper and lower ends thereof, in which both the container body and the end plates are made from a refractory material. The end plates 6 and 7 are attached to the container body 5 with pressure tightness in a manner capable of sealing the inside of the container body 5. In other words, as understood from FIG. 8, at least one of the end plates 6 and 7 (the upper end plate 6 in the illustrated embodiment) is detachable from the container body 5. The reason why the pressure tightness is provided between the container body 5 and the end plates 6 and 7 is to keep a high-pressure state in the inside of the container even in a case where the inside of the container 1 comes to have a high pressure.

A pair of electrodes (an upper electrode and a lower electrode) 8 and 9 each made from an electric conductor (for example, ceramics having a conductive property, such as graphite) are substantially vertically installed at the center portions (substantially central portions) of the end plates 6 and 7 in a fixed state while the electrodes respectively pass through the end plates 6 and 7 in a thickness direction. In other words, the upper electrode 8 and the lower electrode 9 are located on a substantially vertical straight line in an upper-lower direction, and face each other in the shortest distance. With this configuration, in a state where a molten metal M is stored in the container 1, the molten metal M inside is electrically conducted with the electrodes 8 and 9. The electrodes 8 and 9 are detachable from the end plates 6 and 7, respectively. With this configuration, the electrodes 8 and 9 each can be replaced by another one when worn out.

The container body 5 can have various configurations such that a product P obtained by solidifying the molten metal M can be easily taken out. For example, the container body 5 can be divided into two. Alternatively, the inside thereof may be tapered.

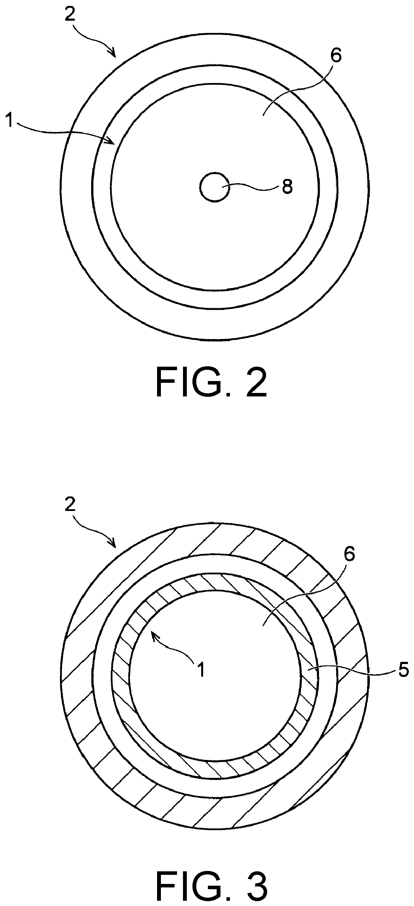

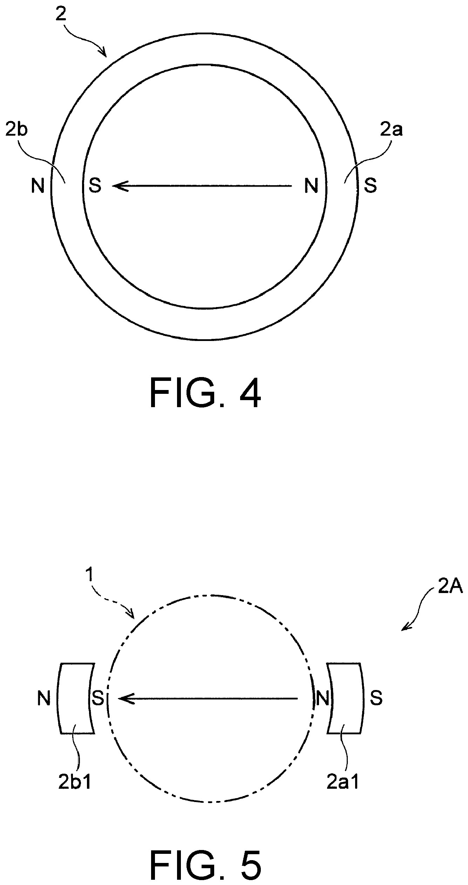

In particular, as understood from, for example, FIG. 1 and FIG. 2 as a plan view of the device 100, the annular magnetic field device 2 including a permanent magnet is arranged at an outer peripheral position of the container body 5. In the magnetic field device 2, an N pole of one magnet (magnet body) 2a faces the other magnet (magnet body) 2b sideways as understood from FIG. 4. Needless to mention, an S pole of the one magnet 2a may face an N pole of the other magnet 2b on the contrary. The magnetic field device 2 can also include an electromagnet.

Both the container 1 and the magnetic field device 2 are detachable from the metal product manufacturing device 100 in a manner relatively independent from each other. With this configuration, for example, the container 1 can be attached to or detached from the magnetic field device 2 provided in a fixed state, as illustrated in the state illustrated in FIG. 1. Alternatively, the magnetic field device 2 can be detachably incorporated into the container 1 provided in the fixed state.

Additionally, a magnetic field device 2A including a pair of magnet pieces 2al and 2b1 can also be used as illustrated in FIG. 5, instead of the integral annular magnetic field device 2 in FIG. 4. The magnetic field device 2A can also include an electromagnet. In this case, polarities of the pair of magnet pieces 2a1 and 2b1 are switched at a desired period such as 1 Hz to 10 Hz, so as to switch a magnetic force line ML between a state of running from right to left and a state of running from left to right in the drawing of FIG. 5.

As understood from FIG. 1, the electrodes 8 and 9 of the container body 5 are connected to the power supply device 3 by wires 11 and 12, respectively. The wires 11 and 12 can be connected to and disconnected from the electrodes 8 and 9, respectively. The power supply device 3 can apply a direct current and an alternating current. Additionally, for example, the container 1 is relatively detachable from the magnetic field device 2 as described above. Accordingly, the container 1 can take a state incorporated into the device 100 as illustrated in FIG. 1 and a state detached from the device as illustrated in FIG. 1A. Needless to mention, the magnetic field device 2 is also detachable from the device 100 as described above.

Next, an operation principle of the device 100 will be described.

In the metal product manufacturing device 100, as understood from FIGS. 1 and 4, the metal product manufacturing device 100 includes the magnetic field device 2 as described later in detail. Therefore, in a case of applying a current I to the molten metal M in an operating state of the magnetic field device 2, first Lorentz force (electromagnetic force) and second Lorentz force (electromagnetic force) act at the same time. However, as described later, in a case where no magnetic field device 2 is provided or in a case where the magnetic field device 2 is not in the operating state, only the first Lorentz force acts as described later.

That is, the first Lorentz force is electromagnetic force generated by combination of the current I and a magnetic field based on the current I. The second Lorentz force is electromagnetic force generated by combination of the current I and an externally-applied magnetic field. The first Lorentz force serves as force directed toward a center of the molten metal M, this force generates a pressure gradient inside the molten metal M, Archimedes electromagnetic force acts on impurities inside the molten metal M, and the impurities are moved toward a periphery of the molten metal M. The second Lorentz force is applied to the molten metal M in a direction of laterally driving the molten metal M. In other words, combination of the current I flowing inside the molten metal M with the magnetic field from the magnetic field device 2 generates the second Lorentz force, and this second Lorentz force is applied to the molten metal M.

Hereinafter, the principle of the metal product manufacturing device 100 will be described more in detail.

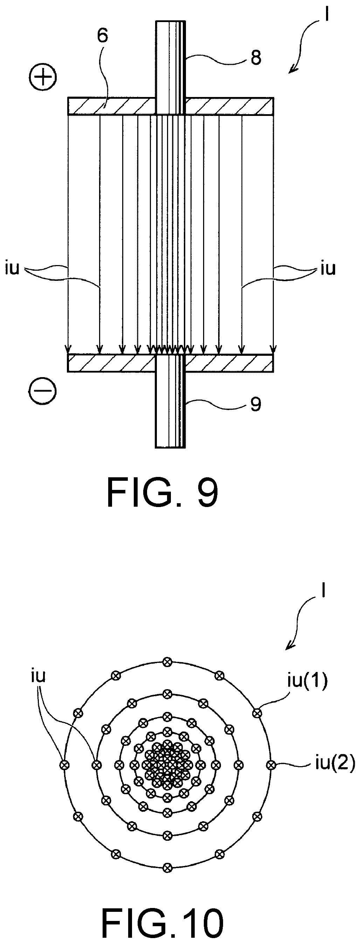

Now, as understood from FIG. 6, assume that the molten metal M of a non-ferrous metal or a ferrous metal is stored inside the container 1, and in this state, the current I is applied from the upper electrode 8 to the lower electrode 9 via the molten metal M in a downward direction in FIG. 9. FIG. 9 is a side view and FIG. 10 is a plan view, and both schematically illustrate density distribution of the current I at this time. This current distribution is obtained from findings obtained by the present inventor on the basis of his long-time experience in the art of the technical field of the present invention. At the same time, a reason why this current distribution is technically correct is supported by a fact that the products illustrated in FIGS. 24 to 26 are obtained as described above according to the present invention. Thus, in the molten metal M, the current density becomes high near the electrodes 8 and 9, and the current density becomes low at positions away from the electrodes 8 and 9. Note that, in these FIGS. 9 and 10, the current I flowing between the pair of electrodes 8 and 9 via the molten metal M is illustrated in a coarse/dense state for easy visual understanding, while deeming the current I as a group of a plurality of unitary currents Iu.

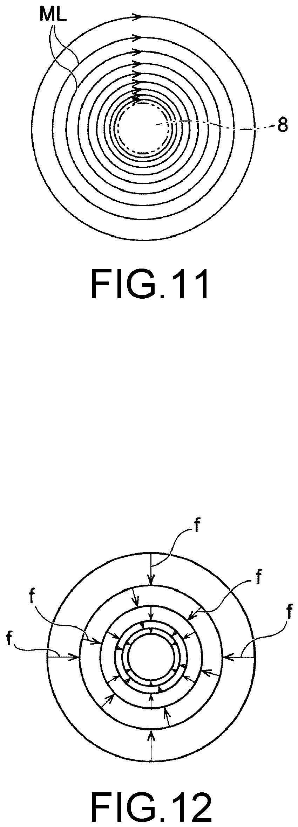

Then, a magnetized field (magnetic field) having a magnitude according to the Biot-Savart law is generated around each of the unitary currents Iu. Consequently, a magnetized field generated by a certain unitary current Iu is combined with another unitary current Iu. For example, in FIG. 10, a magnetized field generated by a certain unitary current Iu (1) is combined with another unitary current Iu (2). This is universally true for all of the unitary currents Iu. With such combination, the Lorentz force f (first Lorentz force) illustrated in FIG. 12 is generated as described later.

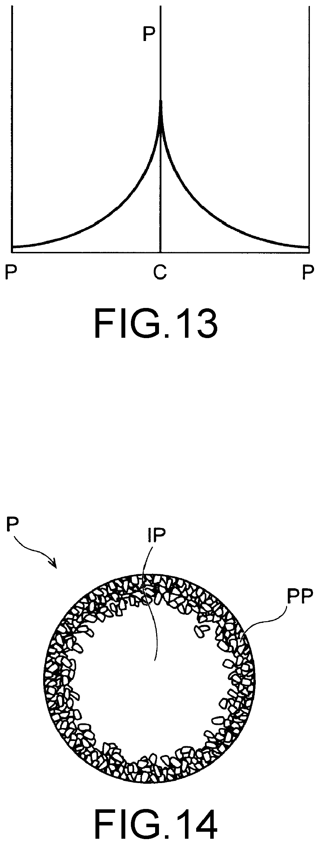

Note that, from a different viewpoint, all of the magnetized fields of the respective unitary currents Iu are synthesized, and a synthesized magnetic field including magnetic force lines ML is generated as illustrated in FIG. 11. As understood also from FIG. 11, a direction of the magnetized field in this synthesized magnetic field is clockwise from the top view. As for the density of this magnetic field, as illustrated in FIG. 11, a center part has high density and the density becomes gradually lower as the position approaches the periphery in the top view. As described above, this magnetic field is combined with the current I (respective unitary currents Iu). With this combination, as illustrated in FIG. 12, the Lorentz force f (first Lorentz force) directed toward the center is generated in the molten metal M of the non-ferrous metal or the current density metal as a base. This Lorentz force is the force that pushes the non-ferrous metal or another metal toward the center part. In other words, in the molten metal M of the non-ferrous metal or the molten metal M of another metal, a pressure gradient in which a pressure is high on the center side and a pressure is low on the periphery side is generated. One example of this pressure gradient is illustrated in FIG. 13. As understood from FIG. 13, pressure P is higher at a center C than at a periphery P. Due to this pressure gradient, impurities contained inside the molten metal of the non-ferrous metal or another metal are pushed toward the periphery. As a result, the impurities are moved to a peripheral portion PP as illustrated in FIG. 14 and made into an accumulated state, and an impurity concentration in an inner portion IP is significantly decreased, and the inner portion is to have a non-ferrous metal or another metal having high purity. Here, a non-ferrous metal product or another metal product having high purity can be obtained by removing the non-ferrous metal or another metal having the high impurity concentration at the peripheral portion PP by a desired method.

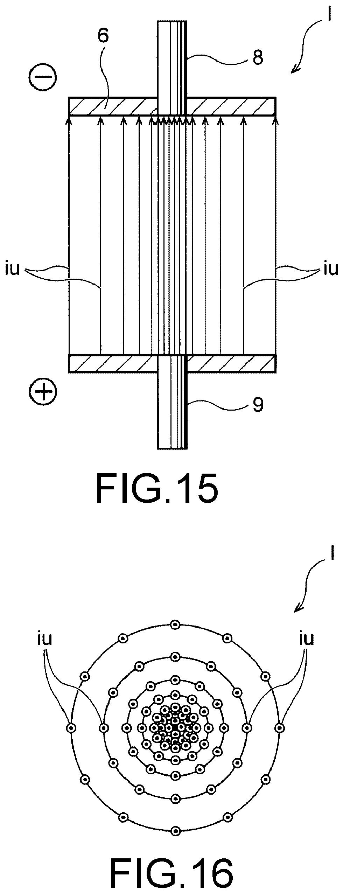

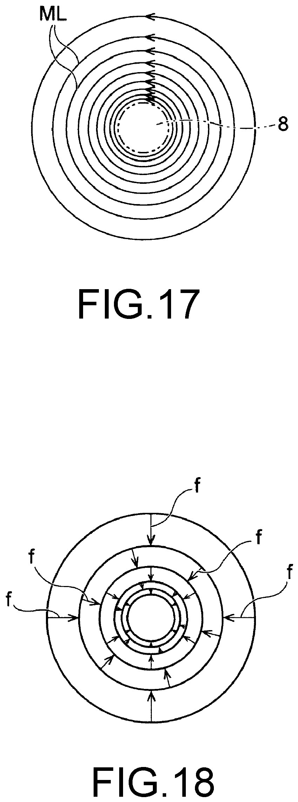

Note that, in the above description, the case of applying the current I downward from above in the drawing is assumed in FIG. 9, but the current I can also be applied upward from below in the opposite direction as illustrated in FIG. 15. In this case also, a pressure gradient has high pressure on the center side and has low pressure on the periphery in a manner similar to the above-described case. Accordingly, the impurities are gathered at the peripheral portion of the product, similar to FIG. 14. Note that FIGS. 16 to 18 are explanatory views corresponding to FIGS. 10 to 12.

Additionally, an alternating current can also be applied between the pair of electrodes 8 and 9. In this case, as understood from the above description, the Archimedes electromagnetic force applied to the impurities is not changed from the case of applying the direct current in any of the directions, and the impurities are gathered at the peripheral portion of the product by the Archimedes electromagnetic force.

Additionally, when the current I is applied between the pair of electrodes 8 and 9, the current I is combined with the magnetic field from the magnetic field device 2. Consequently, the second Lorentz force is generated.

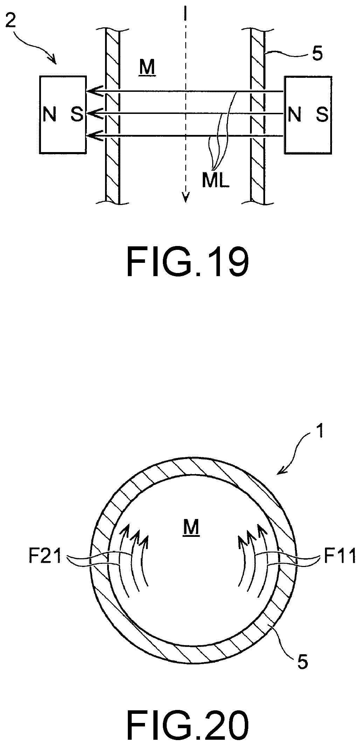

That is, referring to FIGS. 19 and 20, assume that the current I is applied downward in the drawing like this FIG. 19. Consequently, the current I is combined with the magnetic force lines ML from the magnetic field device 2, and streams of the second Lorentz force (F11 and F21) (FIG. 20) are generated. Alternatively, assume that the current I is applied upward from below in FIG. 19. In this case also, streams of the second Lorentz force (F12 and F22) are generated similar to the case where the current flows downward from above, but the directions thereof are opposite. Alternatively, in a case of applying the alternating current as the current I, the Lorentz force (second Lorentz force) caused by combination of the current I with the magnetic field from the magnetic field device 2 is reversed in accordance with a period of the alternating current. In other words, the streams of the Lorentz force (second Lorentz force) F11 and F22 acting in the directions as illustrated in FIG. 20 and the streams of the Lorentz force (second Lorentz force) 12 and F22 acting in the direction as illustrated in FIG. 21 are alternately applied to the molten metal M.

This will be described more in detail with reference to FIGS. 19 to 21. In FIG. 19, consider the case where the current I flows downward in the drawing. In this case, the magnetic force lines ML are directed from right to left in the drawing as illustrated in FIG. 19. Consequently, the current I (respective unitary currents Iu) and the magnetic force lines ML are combined, and the streams of the electromagnetic force (second Lorentz force) F11 and F21 are generated as illustrated in FIG. 20. Also, in the case of applying the current directed upward from below as the current I in FIG. 19, the streams of the electromagnetic force (second Lorentz force) F12 and F22 are generated as illustrated in FIG. 21. Accordingly, in the case of applying the alternating current as the current I (for example, 1 to 10 Hz or the like), the molten metal is applied with the streams of the electromagnetic force F11 and F21 and streams of the electromagnetic force F11 and F21 which are alternately directed in the opposite directions in accordance with the period of the applied current I. Consequently, micro-vibration is caused in the molten metal M. Since such micro-vibration is added to the molten metal M, accumulation of the impurities is accelerated at the peripheral portion PP of the product by the Archimedes electromagnetic force as illustrated in FIG. 14 in the process of changing the molten metal from a liquid phase state to a solid phase state by cooling, and finally, the product P as illustrated in FIG. 14 can be obtained.

In this product P, a metal product with high accuracy can be obtained when the impurities IM at the peripheral portion PP are removed by a desired method. As described above, the impurities are accumulated at the periphery of the product P and can be easily visually grasped, and therefore, removal work of the impurities can be easily and surely performed, and the product P of the non-ferrous metal or another metal can be surely obtained with higher accuracy.

As understood from the above description, the metal product manufacturing device 100 of the present invention can adopt various configurations and various modes of use. For example, the following modes can also be adopted.

(a) In FIG. 1, the magnetic field device 2 manufactured from the permanent magnet is detached or the magnetic field device 2 manufactured from the electromagnet is set to the non-operating state, and in this state, the direct current or the alternating current is applied as the current I between the electrodes 8 and 9.
(b) In FIG. 1, the magnetic field device 2 manufactured from the permanent magnet is installed, or the magnetic field device 2 manufactured from the electromagnet is set to the operating state, and in this state, the direct current or the alternating current is applied as the current I between the electrodes 8 and 9. As understood from the above description, in the case of applying the alternating current, the direction of the electromagnetic force applied to the molten metal M is switched between the opposite directions in a short period, and similar states where the molten metal M is vibrated are obtained as illustrated in FIGS. 20 and 21, and therefore, it is possible to obtain a greater effect of separating the impurities by the Archimedes electromagnetic force. Note that, in this case, when a weak effect is confirmed in accumulating the impurities IM at the peripheral portion PP of the product P at the time of applying the alternating current, the magnetic field device 2 can be detached or set to the non-operating state, although it depends on an actual device. The reason therefor is as follows. The N and S directions of the magnetic field generated by the alternating current are changed. On the other hand, an external magnetic field is a static magnetic field. Accordingly, the static magnetic field and the external magnetic field cancel each other. Thence, in a case of applying the alternating current, it is better to exclude the external magnetic field. Additionally, in experiments conducted by the present inventor described later, the direct current is applied in a state of applying the magnetic field by the magnetic field device 2.

Next, an embodiment of the present invention using the above-described device 100 will be described. Here, the description will be provided for a case in which the magnetic field device 2 is set to the operating state and the direct current is applied.

First, in FIG. 1, the container 1 is detached from the metal product manufacturing device 100 and made to the state illustrated in FIG. 1A. Next, the upper end plate 6 of the detached container 1 is detached as illustrated in FIG. 8, and a non-ferrous metal or another metal provided which is solid, provided as a raw material, and containing impurities is stored inside the container 1. Next, the upper end plate 6 is attached to the container body 5 in a sealed state. As the raw material, it is possible to use, for example, the non-ferrous metal or another metal selected from scrap or the like and containing impurities. Additionally, as an amount of the raw material, an amount that allows electrical conduction between a molten metal and the pair of electrodes 8 and 9 when the raw material is melted and becomes the molten metal afterward is selected.

Next, the container 1 is put into a heating furnace (not illustrated) such as an electric furnace, and then heated, and the raw material, in other words, the non-ferrous metal or another metal inside the container 1 is melted and made into the molten metal M.

After that, the container 1 is taken out from the melting furnace, and is incorporated into the device 100 as illustrated in FIG. 1. Consequently, the current I can be applied to the molten metal M inside the container 1 by the pair of electrodes 8 and 9, and a magnetic field can be applied to the molten metal M by the magnetic field device 2.

After that, cooling is performed in a state of applying the direct current I in the present metal product manufacturing device 100 like (a) or (b) above, for example.

After the cooling, a product P of the solidified non-ferrous metal or another metal is taken out from the container 1.

An end surface of the billet-shaped product P thus obtained is illustrated in, for example, FIG. 14. In other words, the product P is obtained as a product containing a large amount of impurities at the peripheral portion PP and containing little impurities in the inner portion IP. After this, the peripheral portion PP of the product P is removed by a desired means to obtain a final product.

To mass-produce the products P, it is suggested to provide a plurality of metal product manufacturing devices 100.

Additionally, a device made from electromagnets is used as the magnetic field device 2, switching between the state where the magnetic force lines ML run from right to left and the state where the magnetic force lines ML run from left to right as illustrated in FIG. 19 can be performed by switching magnetic poles at a predetermined period (1 Hz to 10 Hz or the like) in FIG. 19. In this case, the direct current is to be applied as the current I.

Note that, in the embodiment of the present invention described above, the case of obtaining the billet as the product P while using the cylindrical container 1 has been exemplified, but a slab may also be obtained as the product P while using a rectangular cylindrical container 1.

### (Example)

Next, an example actually performed by the present inventor will be described.

As the container body 5, a container body made from a mullite tube was used. As a non-ferrous metal provided as a raw material and containing impurities, Al-10 mass% Fe having a size of Φ18 mm × a length 50 mm was stored inside this container body. For the pair of electrodes 8 and 9, graphite electrodes were used.

This was put into an electric furnace to melt the raw material.

The container 1 containing the molten metal that was melted and had a temperature of about 1000°C was incorporated into the metal product manufacturing device 100, and a magnetic field (0.54 T) was applied by the magnetic field device 2, and then cooling was performed while applying, as the current I, direct currents of various values between the pair of electrodes 8 and 9. The values of the current I were appropriately selected from a range of 20 A to 100 A. Note that voltage to be applied at this time is to be adjusted such that the current comes to have an expected value.

A product P (prototype) thus obtained was verified as follows. That is, an end surface of the obtained product P was roughly polished by a known means, and then buffed. A structure of this end surface was observed by macroscopic structure observation and structure observation by an optical microscope. FIGS. 22 to 26 were obtained from color photographs of the macroscopic structure obtained at this time. These FIGS. 22 to 26 selectively indicate, from among the impurities, AI3Fe as an impurity that might cause quality deterioration particularly in aluminum. In FIGS. 22 to 26, values of the applied currents and dimensions of the products are additionally indicated, respectively.

As understood from results thereof, the impurities Al₃Fe was successfully accumulated at the peripheral portion PP of the product P. Additionally, it was also found that the impurity Al₃Fe was more successfully accumulated at the peripheral portion PP when the current of 100 A or less was applied under the conditions of the present experiment described above. Having studied this, it is estimated that when the current was large, the electromagnetic force F11, F21, F12, and F22 was too strong, and Al₃Fe was dispersed inside the base. Judging from this, it can be considered that there are optimal values for: strength of the magnetic field of the magnetic field device 2; and magnitude of the current. Such optimal values depend on various parameters, such as a kind of the non-ferrous metal or another metal as the raw material (a kind of a molten metal), various dimensions, a temperature, magnetic field strength, a current value, and other values. Note that, according to the inventions previously proposed by the present inventor (Japanese Patent Nos. 5,669,504 and 5,431,438), it was not possible to obtain a product in which impurities were accumulated at a periphery. The reason therefor might be that a molten metal is more strongly stirred, and the impurities that are likely to be gathered at the periphery by the Archimedes electromagnetic force are distributed inside the molten metal. Note that, as understood from the above-described example, current density is set to, preferably, about 10 to 40 A/cm². Accordingly, a current amount to be applied is to be changed in accordance with a diameter of the product P.

## Claims

1. A metal product manufacturing device including a container that stores a molten metal having a conductive property, the metal product manufacturing device comprising:
a cylindrical container body portion;
an upper end plate and a lower end plate configured to close both ends of the container body portion in a sealed state;
an upper electrode fixed to the upper end plate in a state of passing through the upper end plate, and having an inner end electrically connectable to the molten metal; and
a lower electrode fixed to the lower end plate in a state of passing through the lower end plate, and having an inner end electrically connectable to the molten metal, wherein
at least the upper end plate is detachable from the container body portion,
the upper electrode is fixed to a substantially central portion of the upper end plate in the state of passing through the upper end plate in a thickness direction,
the lower electrode is fixed to a substantially central portion of the lower end plate in the state of passing through the lower end plate in a thickness direction, and
the upper electrode and the lower electrode are located on a substantially vertical straight line in an upper-lower direction.

2. The metal product manufacturing device according to claim 1, wherein the upper electrode and the lower electrode are detachable from the upper end plate and the lower end plate, respectively.

3. The metal product manufacturing device according to claim 1 or 2, wherein a power supply device capable of applying a direct current or an alternating current is connectable to and disconnectable from the upper electrode and the lower electrode.

4. The metal product manufacturing device according to any one of claims 1 to 3, further comprising a magnetic field device, wherein the magnetic field device includes a pair of magnet bodies located outside the container and arranged at positions facing each other interposing the container, and an N pole of one magnet body and an S pole of the another magnet body face each other via the container.

5. A metal product manufacturing method of manufacturing a metal product from a molten metal having a conductive property, the metal product manufacturing method comprising:
preparing a container that includes:
a cylindrical container body portion;
an upper end plate and a lower end plate configured to close both ends of the container body portion in a sealed state;
an upper electrode fixed to the upper end plate in a state of passing through the upper end plate, and having an inner end electrically connectable to the molten metal; and
a lower electrode fixed to the lower end plate in a state of passing through the lower end plate, and having an inner end electrically connectable to the molten metal, wherein
at least the upper end plate is detachable from the container body portion,
the upper electrode is fixed to a substantially central portion of the upper end plate in the state of passing through the upper end plate in a thickness direction,
the lower electrode is fixed to a substantially central portion of the lower end plate in the state of passing through the lower end plate in a thickness direction, and
the upper electrode and the lower electrode are located on a straight line in an upper-lower direction;
making the metal having the conductive property and stored inside the container into a state of a molten metal while the container is sealed by the upper end plate and the lower end plate;
electrically connecting the inner ends of the pair of electrodes to the molten metal having the conductive property; and
applying a current between the pair of electrodes in this state.

6. The metal product manufacturing method according to claim 5, comprising applying a direct current or an alternating current between the pair of electrodes.

7. The metal product manufacturing method according to claim 6, comprising applying an alternating current of 1 Hz to 10 Hz as the alternating current.

8. The metal product manufacturing method according to any one of claims 5 to 7, comprising: preparing a magnetic field device, in which the magnetic field device includes a pair of magnet bodies located outside the container and arranged at positions facing each other interposing the container, and an N pole of one magnet body and an S pole of the another magnet body face each other via the container; applying, to a molten metal contained inside the container, a magnetic field directed in one lateral direction by the one magnet body and the another magnet body; and applying a current between the pair of electrodes in this state.

9. The metal product manufacturing method according to claim 8, wherein a device including a permanent magnet is used as the magnetic field device.

10. The metal product manufacturing method according to claim 8, wherein a device including an electromagnet is used as the magnetic field device, and polarities of the pair of magnet bodies are switched within a range of 1 Hz to 10 Hz.

11. The metal product manufacturing method according to any one of claims 5 to 10, wherein a current of 60 A to 100 A is applied as the current.
